# EUROPEAN PATENT APPLICATION

(11) **EP 2 113 366 A1**
(43) Date of publication of application: **04.11.2009**
(21) Application number: 08155109.5
(22) Date of filing: 24.04.2008
(51) Int. Cl.: B29C 47/14, B29C 71/02, B29C 47/06

(54) **Extrusion die and manifold system therefor**

(71) Applicant: Tonen Chemical Corporation, Tokyo 108-8005 (JP)
(72) Inventor: The designation of the inventor has not yet been filed
(74) Representative: Veldhuizen, Albert Dirk Willem

(57) **Abstract**

An extrusion die (10) for producing an extrudate of thermoplastic material. The extrusion die includes a die outlet through which a melt stream of the thermoplastic material is extruded, a feed entrance (22) in communication with a feed splitter (24) for dividing the thermoplastic material into a first portion and a second portion, and a cross flow manifold comprising: a first cross flow manifold section for receiving the first portion of the thermoplastic material, the first cross flow manifold section comprising a first passage (26a) having a first axis positioned within a first plane (50) of the extrusion die, a second passage in communication with the first passage and having a second axis positioned within a second plane (52) of the extrusion die, and a third passage in communication with the second passage and having a third axis positioned within a third plane of the extrusion die, the third passage in communication with the die outlet and a second cross flow manifold section for receiving the second portion of the thermoplastic material, the second cross flow manifold section comprising a first passage (28a) having a first axis positioned within the third plane (54) of the extrusion die, a second passage in communication with the first passage and having a second axis positioned within a fourth plane (56) of the extrusion die, and a third passage in communication with the second passage and having a third axis positioned within the first plane of the extrusion die, the third passage in communication with the die outlet.

## Description

### FIELD OF THE INVENTION

This disclosure relates generally to an extrusion apparatus for producing a film or sheet of thermoplastic material.

### BACKGROUND OF THE INVENTION

Extrusion dies are used in manufacturing processes to make a variety of goods. Some dies, for example, are used to form thin films, sheets or other elongated shapes of plastic material. Techniques have been developed for melt laminating which involves joining two or more diverse materials (e.g., thermoplastic materials) from separate molten layers under pressure within a die to emerge as a single laminated material. Such processes make use of the laminar flow principle which enables two or more molten layers under proper operating conditions to join in a common flow channel without intermixing at the contacting interfaces. These multiple layer extrusion systems have come into use as a convenient way to provide for the formation of multiple layers of similar or dissimilar materials from polymer melts.

Various extrusion dies have been produced to extrude multiple layer films from polymer melts. One general configuration of device utilized a first die section which combined the various layers of materials. The combined materials were then flattened and extruded through a second die section. An example of this type of device is illustrated by U.S. Patent No. 5,316,703, incorporated by reference herein in its entirety. This type of device was limited in effectiveness because of the requirement in thin film production that the multi-layer sheet or web have uniform thickness across the width or transverse direction (TD) of the extruded sheet.

A die assembly for extruding polymer melts can be modular and is typically assembled from a plurality of parts and then set in a die station as an integral device. For example, a die assembly can comprise a first die part and a second die part, which together form the components that allow a fluid to enter the assembly and be properly emitted therefrom. The first die part includes a first lip and the second die part includes a second lip, these lips defining a feed gap therebetween that determines the thickness of the fluid film emitted therefrom.

Center feed extrusion dies are commonly used in today's plastics industry. A flow stream entering the manifold undergoes flow divergence, as a result of which there occurs a division of the stream into substreams that flow in generally opposite directions to both ends of the manifold. Pressure drop occurs as each substream flows from the centerline of the manifold to its respective manifold end.

Typically, center feed extrusion dies have a tear drop-shaped, flat manifold, which may be in a form known as a coat hanger manifold, a fish tail manifold, or a T-type manifold. To overcome the pressure drop and produce a substantially equal flow volume of a stream across the stream width, this type of die may further include a flow pressure-compensating preland channel. Also known is a center feed extrusion die having a two stage, flow pressure-compensating, preland channel. This type of apparatus is exemplified in U.S. Patent No. 4,372,739 to Vetter et al. and U.S. Patent No. 5,256,052 to Cloeren.

A die assembly for extruding polymer melts can have a fixed feed gap or a flexible feed gap. With a fixed feed gap, the lips are not movable relative to each other, so that the thickness of the feed gap will always be the same dimension. With a flexible feed gap, one lip is movable relative to the other lip so as to enable adjustment of the feed gap along the width of the assembly. A flexible feed gap is typically accomplished by assembling the first die part so that it contains a flexible web between its rear portion and its front portion (to which the first lip is attached), as well as means for moving the front portion in localized areas. Movement of the front portion results in the adjustment of the position of the lip relative to the other lip and, thus, the thickness of the feed gap in the relevant localized area.

In flexible feed gap operations, localized adjustments of the feed gap can usually be accomplished with conventional die assembly designs in order to accommodate a particular run. However, once initial adjustments are made (i.e., once the movable lip is moved from its original adjustment), returning the lip to a known position is not so easily done, if it is even possible. Also, without a clean die and specialized equipment, it is impossible to adjust a feed gap on an industry standard flex die to a known precision gap opening.

The production of certain specialty films, such as microporous polyolefin membranes have presented additional requirements in the design of extrusion dies for their production. Microporous polyolefin membranes are useful as separators for primary batteries and secondary batteries such as lithium ion secondary batteries, lithium-polymer secondary batteries, nickel-hydrogen secondary batteries, nickel-cadmium secondary batteries, nickel-zinc secondary batteries, silver-zinc secondary batteries, etc. When the microporous polyolefin membrane is used as a battery separator, particularly as a lithium ion battery separator, the membrane's performance significantly affects the properties, productivity and safety of the battery. Accordingly, the microporous polyolefin membrane should have suitably well-balanced permeability, mechanical properties, dimensional stability, shutdown properties, meltdown properties, etc. The term "well-balanced" means that the optimization of one of these characteristics does not result in a significant degradation in another.

As is known, it is desirable for the batteries to have a relatively low shutdown temperature and a relatively high meltdown temperature for improved battery safety, particularly for batteries exposed to high temperatures under operating conditions. Consistent dimensional properties, such as film thickness, are essential to high performing films. A separator with high mechanical strength is desirable for improved battery assembly and fabrication, and for improved durability. The optimization of material compositions, casting and stretching conditions, heat treatment conditions, etc. have been proposed to improve the properties of microporous polyolefin membranes.

In general, microporous polyolefin membranes consisting essentially of polyethylene (i.e., they contain polyethylene only with no significant presence of other species) have relatively low meltdown temperatures. Accordingly, proposals have been made to provide microporous polyolefin membranes made from polymer solutions which contain mixed resins of polyethylene and polypropylene, and multi-layer, microporous polyolefin membranes having polyethylene layers and polypropylene layers in order to increase meltdown temperature. The use of these polymer solutions containing such mixed resins and the production of multilayer films having layers of differing polyolefins can make the production of films having consistent dimensional properties, such as film thickness, all the more difficult.

JP U3048972 proposes an extrusion die design said to eliminate flow divergence within the extrusion manifold. The proposed die design is provided with two manifolds to form two slit currents. The molten polymer is fed into a first inlet at an end of a first manifold and a second inlet at the end of a second manifold on the opposite side of the first inlet. Two slit currents flow together inside the die. It is theorized that due to the absence of flow divergence of the melt inside the manifold, it may be possible to achieve uniform flow distribution within the die. This is said to result in improved thickness uniformity in the transverse direction the film or the sheet.

JP7-216118A discloses a battery separator formed from a porous film comprising polyethylene and polypropylene as indispensable components and having at least two microporous layers each with different polyethylene content. The polyethylene content is 0 to 20% by weight in one microporous layer, 21 to 60% by weight in the other microporous layer, and 2 to 40% by weight in the overall film. The battery separator has relatively high shutdown-starting temperature and mechanical strength.

WO 2004/089627 discloses a microporous polyolefin membrane made of polyethylene and polypropylene comprising two or more layers, the polypropylene content being more than 50% and 95% or less by mass in at least one surface layer, and the polyethylene content being 50 to 95% by mass in the entire membrane.

WO 2005/113657 discloses a microporous polyolefin membrane having conventional shutdown properties, meltdown properties, dimensional stability and high-temperature strength. The membrane is made using a polyolefin composition comprising (a) composition comprising lower molecular weight polyethylene and higher molecular weight polyethylene, and (b) polypropylene. This microporous polyolefin membrane is produced by a so-called "wet process".

Despite these advances in the art, there remains a need for extrusion dies and manifold systems capable of producing microporous polyolefin membranes and other high quality films or sheets from polymer solutions.

### SUMMARY OF THE INVENTION

Provided is an extrusion die for producing an extrudate of thermoplastic material from a solution which contains polymer ("polymer solution"). The extrusion die includes a die outlet through which the polymer solution is extruded, a feed entrance in communication with a feed splitter for dividing the thermoplastic material into a first portion and a second portion, and a cross flow manifold comprising: a first cross flow manifold section for receiving the first portion of the thermoplastic material, the first cross flow manifold section comprising a first passage having a first axis positioned within a first plane of the extrusion die, a second passage in communication with the first passage and having a second axis positioned within a second plane of the extrusion die, and a third passage in communication with the second passage and having a third axis positioned within a third plane of the extrusion die, the third passage in communication with the die outlet, and a second cross flow manifold section for receiving the second portion of the thermoplastic material, the second cross flow manifold section comprising a first passage having a first axis positioned within the third plane of the extrusion die, a second passage in communication with the first passage and having a second axis positioned within a fourth plane of the extrusion die, and a third passage in communication with the second passage and having a third axis positioned within the first plane of the extrusion die, the third passage in communication with the die outlet.

In another aspect, a process for producing an extrudate of thermoplastic material is also provided. The process includes the steps of combining at least one polyolefin and a diluent (e.g., a solvent) to prepare a polyolefin solution, and extruding the polyolefin solution through an extrusion die to form an extrudate, the extrusion die comprising (i) a die outlet through which a melt stream of the thermoplastic material is extruded as a film or sheet, (ii) a feed entrance in communication with a feed splitter for dividing the thermoplastic material into a first portion and a second portion, (iii) a cross flow manifold comprising: a first cross flow manifold section for receiving the first portion of the thermoplastic material, the first cross flow manifold section comprising a first passage having a first axis positioned within a first plane of the extrusion die, a second passage in communication with the first passage and having a second axis positioned within a second plane of the extrusion die, and a third passage in communication with the second passage and having a third axis positioned within a third plane of the extrusion die, the third passage in communication with the die outlet, and a second cross flow manifold section for receiving the second portion of the thermoplastic material, the second cross flow manifold section comprising a first passage having a first axis positioned within the third plane of the extrusion die, a second passage in communication with the first passage and having a second axis positioned within a fourth plane of the extrusion die, and a third passage in communication with the second passage and having a third axis positioned within the first plane of the extrusion die, the third passage in communication with the die outlet.

It has been found that the shape memory characteristics of a polyolefin melt can be a factor in maintaining uniform transverse direction film and sheet thickness as the film or sheet exits an extrusion die. This shape-memory effect has now been observed in thermoplastic materials extruded from polymer solutions, such as solutions containing polyolefin and diluent. This is surprising because it was expected that the presence of the diluent would at least moderate (if not eliminate) the shape-memory effect in the extrudate. The moderation of shape-memory effects in a polymer solution was expected because the lower amount of polymer (compared to a melt) was thought to lead to fewer polymer chain entanglements, and, hence, improved rheological properties.

Consequently, the invention is based in part on the discovery that extrusion die manifold design can influence the shape memory phenomena in the extrusion of polymer solutions. As such, in an exemplary form disclosed herein, the cross flow manifold is provided with a flow path of a length sufficient to moderate or substantially eliminate the shape memory characteristics of the thermoplastic material.

In a further exemplary form disclosed herein, the first cross flow manifold section and the second cross flow manifold section of the cross flow manifold each have a flow path that substantially traverses the extrusion die's length at least two times.

In a still further exemplary form disclosed herein, the die outlet is a slotted die outlet which includes a first die lip and a second die lip, the first die lip including a flexible lip bar having actuatable means located along a length thereof.

In yet a further exemplary form disclosed herein, the actuatable means of the first die lip includes a plurality of individual lip bolts effective for varying the width of the slotted die outlet in a region adjacent a point of adjustment.

These and other advantages, features and attributes of the disclosed extrusion dies and manifold systems and their advantageous applications and/or uses will be apparent from the detailed description that follows, particularly when read in conjunction with the figures appended hereto.

### BRIEF DESCRIPTION OF THE DRAWINGS

FIG. 1 is an exploded perspective view of an extrusion die having a cross flow manifold system for producing an extrudate of thermoplastic material, in accordance herewith.

FIG. 2 is a partially exploded perspective view of the extrusion die having a cross flow manifold system of FIG. 1, showing a pair of die end plates for positioning on the die, in accordance herewith.

FIG. 3 is a schematic view of an extrusion die for producing an extrudate of thermoplastic material showing the respective flow paths of the thermoplastic material, in accordance herewith.

FIG. 4 is a side view of an extrusion die for producing an extrudate of thermoplastic material showing a flexible lip bar having actuatable means, in accordance herewith.

FIG. 5 is a perspective view of a coat hanger extrusion die showing the flow path of the thermoplastic material.

FIG. 6 is a perspective view of a cross flow extrusion die showing the flow path of the thermoplastic material.

### DETAILED DESCRIPTION OF THE INVENTION

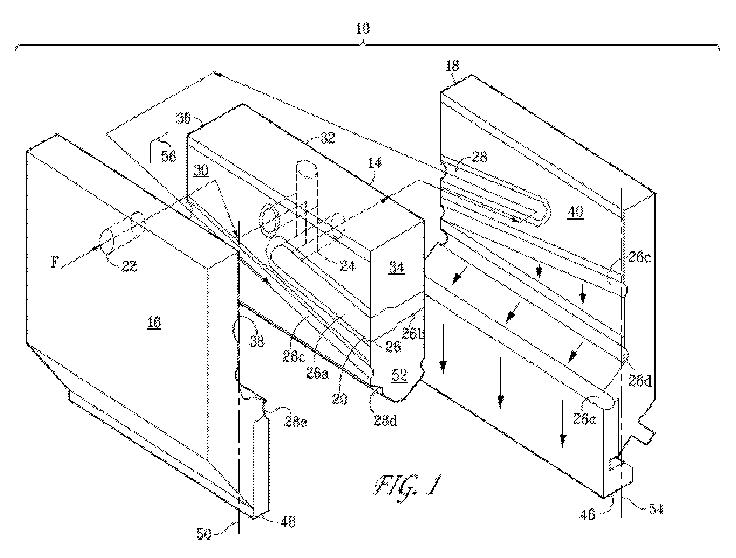

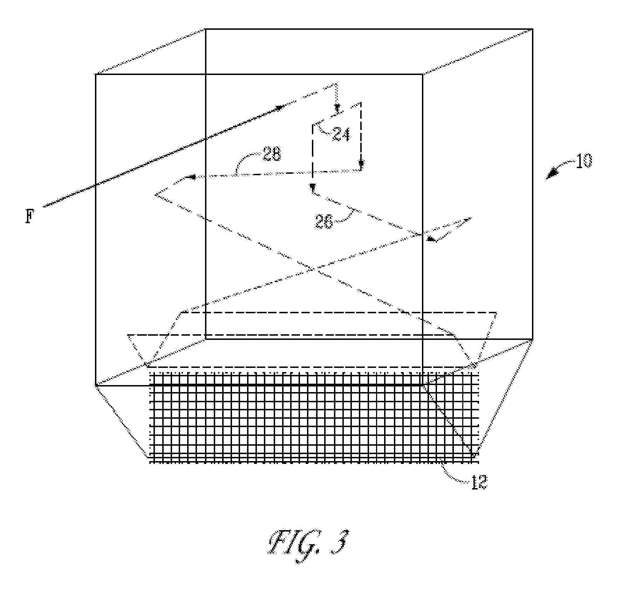

Reference is now made to FIGS. 1-6, wherein like numerals are used to designate like parts throughout.

Referring now to FIGS. 1-3, an extrusion die 10 for producing an extrudate of thermoplastic material, in accordance herewith, is shown. Extrusion die 10 includes a die outlet 12, which may be a slotted die outlet, as shown, through which a melt stream of the thermoplastic material may be extruded as a film or sheet (extrudate). In one form, extrusion die 10 is provided with a first die section 14, a second die section 16, and a third die section 18 and a cross flow manifold 20 that traverses a plurality of passageways formed within first die section 14, second die section 16, and third die section 18. As may be appreciated, the provision of extrusion die 10 having first die section 14, second die section 16 and third die section 18 facilitates the machining and easy cleaning of cross flow manifold 20.

As shown in detail by reference to FIG. 1, cross flow manifold 20 includes a feed entrance 22 and a feed splitter 24 for feeding the plurality of passageways of cross flow manifold 20 in communication with die outlet 12. In operation, a feed stream of polymer solution F is split into a first stream S1 and a second stream S2, the first stream S1 feeding cross flow manifold section 26 and the second stream S2 feeding cross flow manifold section 28.

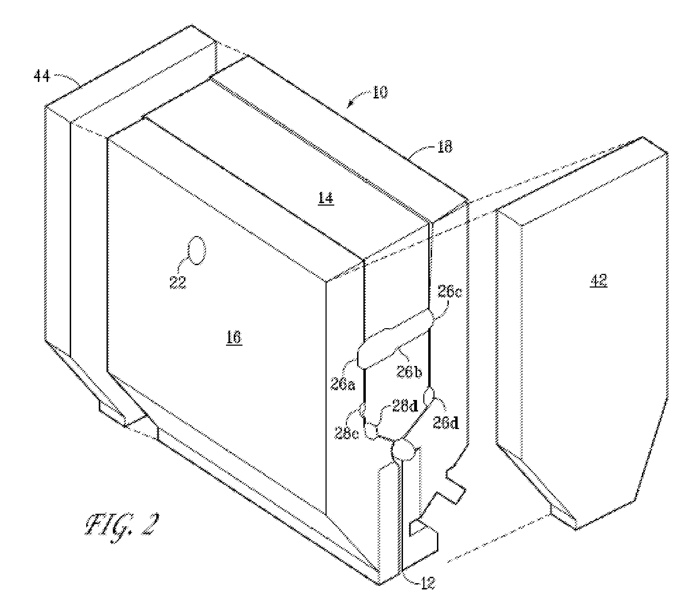

First die section 14 includes a first side 30, a second side 32, a first end 34 and a second end 36, with portions of cross flow manifold 20 formed within each. Second die section 16 includes an interior side 38 and third die section 18 includes an interior side 40, with portions of cross flow manifold 20 formed within each. As may be envisioned from FIG. 2, first end plate 42 and second end plate 44 are also provided with portions of cross flow manifold 20 formed within each.

In one form, cross flow manifold section 26 includes a first passage 26a having a first axis positioned within a first plane 50 formed by first side 30 of first die section 14 and interior side 38 of second die section 16, a second passage 26b having a second axis positioned within a second plane 52 formed between first end 34 of first die section 14 and a first end plate 42 (see FIG. 2) and a third passage 26c having a third axis positioned within a third plane 54 formed between second side 32 of first die section 14 and interior side 40 of third die section 18. As may be envisioned by reference to FIG. 1, a portion of the flow of polymer solution will traverse directly downward from third passage 26c, while the balance of the flow will traverse through fourth passage 26d having a fourth axis positioned within third plane 54 formed between second side 32 of first die section 14 and interior side 40 of third die section 18.

Likewise, cross flow manifold section 28 may be provided with a first passage 28a having a first axis positioned within third plane 54 formed between second side 32 of first die section 14 and interior side 40 of third die section 18, a second passage 28b having a second axis positioned within a fourth plane 56 formed between second end 36 of first die section 14 and a second end plate 44 (see FIG. 2) and a third passage 28c having a third axis positioned within first plane 50 formed between first side 30 of first die section 14 and interior side 38 of second die section 16. As may be envisioned by reference to FIG. 1, a portion of the flow of polymer solution will traverse directly downward from third passage 28c, while the balance of the flow will traverse through fourth passage 28d having a fourth axis positioned within first plane 50 formed between first side 30 of first die section 14 and interior side 38 of second die section 16.

In one form, the first cross flow manifold section 26 of cross flow manifold 20 and the second cross flow manifold section 28 of cross flow manifold 20 each have a pressure manifold 26d and 28d, respectively, in communication with die outlet 12.

As shown, in one form, the first plane and the third plane and the second plane and the fourth plane may be aligned in substantially parallel spaced relationships, respectively. As used herein, by "substantially parallel spaced relationship" is meant that the opposing planes (i.e., first and third and second and fourth) do not intersect within the outer boundaries of extrusion die 10.

When forming microporous membrane films and sheets from the polyolefin solution described hereinbelow, a surprising characteristic of these materials is their inherent propensity for shape memory similar to that which is observed in the extrusion of polymer melts. Other films and sheets formed from other polymer besides polyolefin may also exhibit these characteristics. As is known to those skilled in the art, shape-memory plastics have a thermoplastic phase and a "frozen" phase. The initial shape is "memorized" in the frozen phase, with the shape-memory effect permitting its recovery from whatever temporary shape the plastic has been formed into. As may be appreciated, a polymer chain has an ideal spatial configuration (Gaussian coil) in a melt state or in a solution without perturbation. When the polymer is deformed by an external force, e.g., shear flow, the polymer relaxes its shape returns to the ideal Gaussian coil by allowing itself to diffuse in the polymer axis direction. The relaxation time strongly depends on the number of entanglements, therefore, the higher the molecular weight of the polymer and the higher the polymer concentration of the solution is, the longer the relaxation time required.

The shape memory characteristics of a polyolefin melt and polyolefin solution can be a factor in maintaining uniform transverse direction film and sheet thickness as the film or sheet exits an extrusion die. It has been found that manifold design can influence and correct for this phenomenon. As such, in one form, cross flow manifold section 26 and cross flow manifold section 28 of cross flow manifold 20 each have a flow path of a length sufficient to substantially eliminate the shape memory characteristics of the thermoplastic material.

In operation, in one form, a portion of a polyolefin solution forming the thermoplastic material traverses first cross flow manifold section 26 of the cross flow manifold 20 and second cross flow manifold section 28 of cross flow manifold 20 a distance substantially equivalent to the extrusion die's length more than once.

In another form, cross flow manifold section 26 and cross flow manifold section 28 of cross flow manifold 20 each have a flow path that substantially traverses the length of extrusion die 10 at least two times.

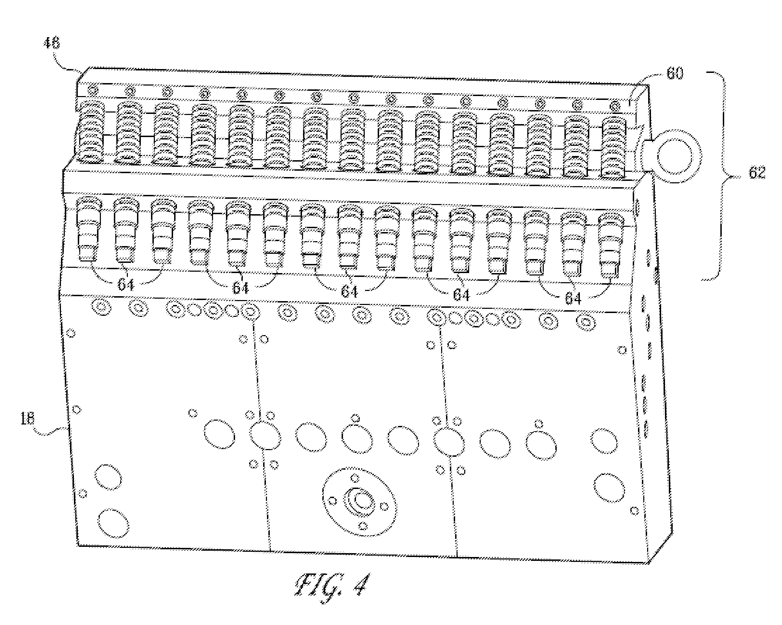

As shown with particular reference to FIG. 4, die outlet 12 of extrusion die 10, which may be a slotted die outlet, may be provided with a first die lip 46 and a second die lip 48, first die lip 46 including a flexible lip bar 60 having externally actuatable means 62 located along a length thereof. As shown, externally actuatable means 62 includes a plurality of individual lip bolts 64, each lip bolt 64 effective for varying the width of slotted die outlet 12 in a region adjacent to a point of adjustment.

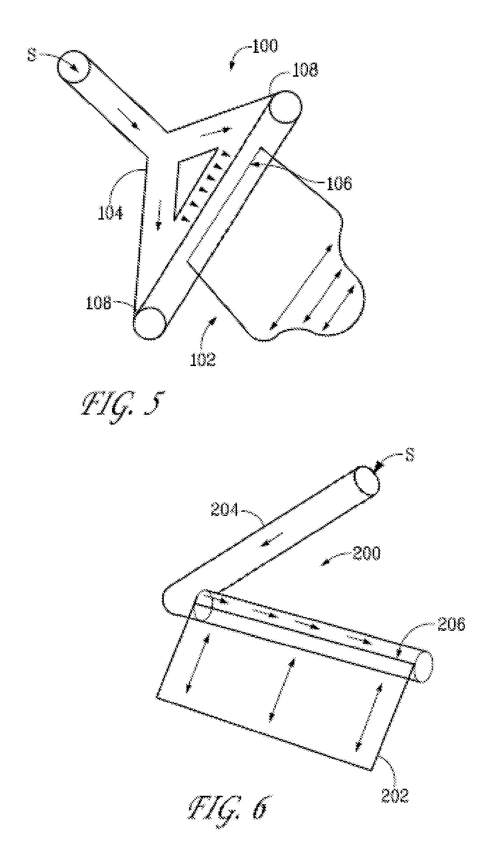

The extrusion dies and manifold systems disclosed herein overcome a difficulty when extruding a polyolefin solution through a die in a variety of processes, including a "wet" microporous polyolefin membrane film or sheet process. As may be seen by reference to FIG. 5, this difficulty stems from the fact that when a coat hanger manifold (CH) die 100 is used for the extrusion of a monolayer microporous membrane film or sheet 102, shape-memory effects in the extrudate cause a thickness non-uniformity along the transverse direction of the extrudate. As may be appreciated, shape-memory effects in the extrudate tend to act in a direction perpendicular to the flow of the polyolefin solution S in the die manifold 104. Since, in coat hanger manifold die 100, the primary direction of flow in the manifold is toward the die lip 106, the shape-memory effect tends to occur in the transverse direction of the extrudate. This causes a redistribution of material in the extrudate toward the extrudate's center along the transverse direction.

Referring now to FIG. 6, in the case of monolayer extrusion dies, this issue can be overcome through the use of a cross flow manifold (CF) die 200, where the polyolefin solution S is made to traverse the width of the die manifold 204 before polyolefin solution S approaches the die lip 206. As may be appreciated, this results in a significant amount of polyolefin solution S in the die manifold flowing in a direction parallel to die lip 206. Consequently, shape memory effects will occur primarily in the machine direction, resulting in a more uniform distribution of the extrudate in the transverse direction.

As indicated, the extrusion dies and manifold systems disclosed herein are useful in forming microporous membrane films and sheets. These films and sheets find particular utility in the critical field of battery separators. The multi-layer films and sheets described hereinbelow can be produced using a monolayer die and manifold system of the type described hereinabove to produce a monolayer film or sheet, with additional layers laminated thereto in a conventional manner. Co-extrusion can also be used, where a compound die (e.g., one having at least two outlets in close proximity) has at least one component die having the manifold system of the invention.

In one form, the multi-layer, microporous membrane comprises two layers. The first layer (e.g., the skin, top or upper layer of the membrane) comprises a first microporous layer material, and the second layer (e.g., the bottom or lower or core layer of the membrane) comprises a second microporous layer material. For example, the membrane can have a planar top layer when viewed from above on an axis approximately perpendicular to the transverse and longitudinal (machine) directions of the membrane, with the bottom planar layer hidden from view by the top layer.

In another form, the multi-layer, microporous membrane comprises three or more layers, wherein the outer layers (also called the "surface" or "skin" layers) comprise the first microporous layer material and at least one core or intermediate layer comprises the second microporous layer material. In a related form, where the multi-layer, microporous polyolefin membrane comprises two layers, the first layer consists essentially of the first microporous layer material and the second layer consists essentially of the second microporous layer material. In a related form where the multi-layer, microporous polyolefin membrane comprises three or more layers, the outer layers consist essentially of the first microporous layer material and at least one intermediate layer consists essentially of (or consists of) the second microporous layer material.

Starting materials having utility in the production of the afore-mentioned films and sheets will now be described. As will be appreciated by those skilled in the art, the selection of a starting material is not critical as long as an extrusion die and manifold system employing cross flow manifold principles can be applied. In one form, the first and second microporous layer materials contain polyethylene. In one form, the first microporous layer material contains a first polyethylene ("PE-1") having an Mw value of less than about 1 x 10⁶ or a second polyethylene ("UHMWPE-1") having an Mw value of at least about 1 x 10⁶. In one form, the first microporous layer material can contain a first polypropylene ("PP-1"). In one form, the first microporous layer material comprises one of (i) a polyethylene (PE), (ii) an ultra high molecular weight polyethylene (UHMWPE), (iii) PE-1 and PP-1, or (iv) PE-1, UHMWPE-1, and PP-1.

In one form of the above (ii) and (iv), UHMWPE-1 can preferably have an Mw in the range of from about 1 x 10⁶ to about 15 x 10⁶ or from about 1 x 10⁶ to about 5 x 10⁶ or from about 1 x 10⁶ to about 3 x 10⁶,and preferably contain greater than about 1 wt.%, or about 15 wt.% to 40 wt.%, on the basis of total amount of PE-1 and UHMWPE-1 in order to obtain a microporous layer having a hybrid structure defined in the later section, and can be at least one of homopolymer or copolymer. In one form of the above (iii) and (iv), PP-1 can be at least one of a homopolymer or copolymer, or can preferably contain no more than about 25 wt.%, on the basis of total amount of the first layer microporous material. In one form, the Mw of polyolefin in the first microporous layer material can have about 1 x 10⁶ or less, or in the range of from about 1 x 10⁵ to about 1 x 10⁶ or from about 2 x 10⁵ to about 1 x 10⁶ in order to obtain a microporous layer having a hybrid structure defined in the later section. In one form, PE-1 can preferably have an Mw ranging from about 1 x 10⁴ to about 5 x 10⁵, or from about 2 x 10⁵ to about 4 x 10⁵, and can be one or more of a high-density polyethylene, a medium-density polyethylene, a branched low-density polyethylene, or a linear low-density polyethylene, and can be at least one of a homopolymer or copolymer.

In one form, the first microporous layer material (the first layer of the two-layer, microporous polyolefin membrane and the first and third layers of a three-layer microporous polyolefin membrane) has a hybrid structure, which is characterized by a pore size distribution exhibiting relatively dense domains having a main peak in a range of 0.01 µm to 0.08 µm and relatively coarse domains exhibiting at least one sub-peak in a range of more than 0.08 µm to 1.5 µm or less in the pore size distribution curve. The ratio of the pore volume of the dense domains (calculated from the main peak) to the pore volume of the coarse domains (calculated from the sub-peak) is not critical, and can range, e.g., from about 0.5 to about 49. Pore size distribution can be measured, e.g., using conventional methods such as mercury porosimitry.

In one form, the second microporous layer material comprises one of: (i) a fourth polyethylene having an Mw of at least about 1 x 10⁶, (UHMWPE-2), (ii) a third polyethylene having an Mw that is less than 1 x 10⁶ and UHMWPE-2 and the fourth polyethylene, wherein the fourth polyethylene is present in an amount of at least about 8% by mass based on the combined mass of the third and fourth polyethylene; (iii) UHMWPE-2 and PP-2, or (iv) PE-2, UHMWPE-2, and PP-2. In one form of the above (ii), (iii) and (iv), UHMWPE-2 can contain at least about 8 wt.%, or at least about 20 wt.%, or at least about 25 wt.%, based on the total amount of UHMWPE-2, PE-2 and PP-2 in order to produce a relatively strong multi-layer, microporous polyolefin membrane. In one form of the above (iii) and (iv), PP-2 can be at least one of a homopolymer or copolymer, and can contain 25 wt.% or less, or in the range of from about 2% to about 15%, or in the range of from about 3% to about 10%, based on the total amount of the second microporous layer material. In one form, preferable PE-2 can be the same as PE-1, but can be selected independently. In one form, preferable UHMWPE-2 can be the same as UHMWPE-1, but can be selected independently.

In addition to the first, second, third, and fourth polyethylenes and the first and second polypropylenes, each of the first and second layer materials can optionally contain one or more additional polyolefins, identified as the seventh polyolefin, which can be, e.g., one or more of polybutene-1, polypentene-1, poly-4-methylpentene-1, polyhexene-1, polyoctene-1, polyvinyl acetate, polymethyl methacrylate, polystyrene and an ethylene α-olefin copolymer (except for an ethylene-propylene copolymer) and can have an Mw in the range of about 1 x 10⁴ to about 4 x 10⁶. In addition to or besides the seventh polyolefin, the first and second microporous layer materials can further comprise a polyethylene wax, e.g., one having an Mw in the range of about 1 x 10³ to about 1 x 10⁴.

In one form, a process for producing a two-layer microporous polyolefin membrane is provided wherein an extrusion die and manifold system of the type disclosed herein is employed. In another form, the microporous polyolefin membrane has at least three layers and is produced through the use of an extrusion die and manifold system of the type disclosed herein. For the sake of brevity, the production of the microporous polyolefin membrane will be mainly described in terms of two-layer and three-layer membrane.

In one form, a three-layer microporous polyolefin membrane comprises first and third microporous layers constituting the outer layers of the microporous polyolefin membrane and a second (core) layer situated between (and optionally in planar contact with) the first and third layers. In another form, the first and third layers are produced from a first polyolefin solution and the second (core) layer is produced from a second polyolefin solution.

In one form, a method for producing the multi-layer, microporous polyolefin membrane is provided. The method comprises the steps of (1) combining (e.g., by melt-blending) a first polyolefin composition and a membrane-forming solvent to prepare a first polyolefin solution, (2) combining a second polyolefin composition and a second membrane-forming solvent to prepare a second polyolefin solution, (3) extruding the first polyolefin solution through a first die and the second solution through a second die and then laminating the extruded first and second polyolefin solutions to form a multi-layer extrudate, (4) cooling the multi-layer extrudate to form a multi-layer, gel-like sheet (cooled extrudate), (5) removing at least a portion of the membrane-forming solvent from the multi-layer, gel-like sheet to form a solvent-removed gel-like sheet, and (6) drying the solvent-removed gel-like sheet in order to form the multi-layer, microporous membrane. An optional stretching step (7), and an optional hot solvent treatment step (8) can be conducted between steps (4) and (5), if desired. After step (6), an optional step (9) of stretching a multi-layer, microporous membrane, an optional heat treatment step (10), an optional cross-linking step with ionizing radiations (11), and an optional hydrophilic treatment step (12), etc., can be conducted.

The first polyolefin composition comprises polyolefin resins as described above that can be combined, e.g., by dry mixing or melt blending with an appropriate membrane-forming solvent to produce the first polyolefin solution. Optionally, the first polyolefin solution can contain various additives such as one or more antioxidant, fine silicate powder (pore-forming material), etc., provided these are used in a concentration range that does not significantly degrade the desired properties of the multi-layer, microporous polyolefin membrane.

The first membrane-forming solvent is preferably a solvent that is liquid at room temperature. While not wishing to be bound by any theory or model, it is believed that the use of a liquid solvent to form the first polyolefin solution makes it possible to conduct stretching of the gel-like sheet at a relatively high stretching magnification. In one form, the first membrane-forming solvent can be at least one of aliphatic, alicyclic or aromatic hydrocarbons such as nonane, decane, decalin, p-xylene, undecane, dodecane, liquid paraffin, etc.; mineral oil distillates having boiling points comparable to those of the above hydrocarbons; and phthalates liquid at room temperature such as dibutyl phthalate, dioctyl phthalate, etc. In one form where it is desired to obtain a multi-layer, gel-like sheet having a stable liquid solvent content, non-volatile liquid solvents such as liquid paraffin can be used, either alone or in combination with other solvents. Optionally, a solvent which is miscible with polyethylene in a melt blended state but solid at room temperature can be used, either alone or in combination with a liquid solvent. Such solid solvent can include, e.g., stearyl alcohol, ceryl alcohol, paraffin waxes, etc.

The viscosity of the liquid solvent is not a critical parameter. For example, the viscosity of the liquid solvent can range from about 30 cSt to about 500 cSt, or from about 30 cSt to about 200 cSt, at 25°C. Although it is not a critical parameter, when the viscosity at 25°C is less than about 30 cSt, it can be more difficult to prevent foaming the polyolefin solution, which can lead to difficulty in blending. On the other hand, when the viscosity is greater than about 500 cSt, it can be more difficult to remove the liquid solvent from the multi-layer microporous polyolefin membrane.

In one form, the resins, etc., used to produce to the first polyolefin composition are melt-blended in, e.g., a double screw extruder or mixer. For example, a conventional extruder (or mixer or mixer-extruder) such as a double-screw extruder can be used to combine the resins, etc., to form the first polyolefin composition. The membrane-forming solvent can be added to the polyolefin composition (or alternatively to the resins used to produce the polyolefin composition) at any convenient point in the process. For example, in one form where the first polyolefin composition and the first membrane-forming solvent are melt-blended, the solvent can be added to the polyolefin composition (or its components) at any of (i) before starting melt-blending, (ii) during melt blending of the first polyolefin composition, or (iii) after melt-blending, e.g., by supplying the first membrane-forming solvent to the melt-blended or partially melt-blended polyolefin composition in a second extruder or extruder zone located downstream of the extruder zone used to melt-blend the polyolefin composition.

When melt-blending is used to form the polyolefin composition, the melt-blending temperature is not critical. For example, the melt-blending temperature of the first polyolefin solution can range from about 10°C higher than the melting point Tm₁ of the polyethylene in the first resin to about 120°C higher than Tm₁. For brevity, such a range can be represented as Tm₁ + 10°C to Tm₁ + 120°C. In a form where the polyethylene in the first resin has a melting point of about 130°C to about 140°C, the melt-blending temperature can range from about 140°C to about 250°C, or from about 170°C to about 240°C.

When an extruder such as a double-screw extruder is used for melt-blending, the screw parameters are not critical. For example, the screw can be characterized by a ratio L/D of the screw length L to the screw diameter D in the double-screw extruder, which can range, for example, from about 20 to about 100 or from about 35 to about 70. Although this parameter is not critical, when L/D is less than about 20, melt-blending can be more difficult, and when L/D is more than about 100, faster extruder speeds might be needed to prevent excessive residence time of the polyolefin solution in the double-screw extruder, which can lead to undesirable molecular weight degradation. Although it is not a critical parameter, the cylinder (or bore) of the double-screw extruder can have an inner diameter of in the range of about 40 mm to about 100 mm, for example.

The amount of the first polyolefin composition in the first polyolefin solution is not critical. In one form, the amount of first polyolefin composition in the first polyolefin solution can range from about 1 wt.% to about 75 wt.%, based on the weight of the polyolefin solution, for example from about 20 wt.% to about 70 wt.%. The remainder of the polyolefin solution can be the solvent. For example, the polyolefin solution can be about 30 wt.% to about 80 wt.% solvent (or diluent) based on the weight of the polyolefin solution.

The second polyolefin solution can be prepared by the same methods used to prepare the first polyolefin solution. For example, the second polyolefin solution can be prepared by melt-blending a second polyolefin composition with a second membrane-forming solvent.

Although it is not a critical parameter, the melt-blending conditions for the second polyolefin composition can differ from the conditions described for producing the first polyolefin composition in that the melt-blending temperature of the second polyolefin composition can range from about the melting point Tm₂ of the polyethylene in the second resin + 10°C to Tm₂ + 120°C.

The amount of the second polyolefin composition in the second polyolefin solution is not critical. In one form, the amount of second polyolefin composition in the second polyolefin solution can range from about 1 wt.% to about 75 wt.%, based on the weight of the second polyolefin solution, for example from about 20 wt.% to about 70 wt.%. The remainder of the polyolefin solution can be the solvent. For example, the polyolefin solution can be about 30 wt.% to about 80 wt.% solvent (or diluent) based on the weight of the polyolefin solution.

Advantageously, monolayer extrusion dies of the type disclosed herein are used for forming an extrudate that can be laminated. In one form, extrusion dies, which can be adjacent or connected, are used to form the extrudates. The first and second sheet dies are connected to first and second extruders, respectively, where the first extruder contains the first polyolefin solution and the second extruder contains the second polyolefin solution. While not critical, lamination is generally easier to accomplish when the extruded first and second polyolefin solution are still at approximately the extrusion temperature.

In another form, first, second, and third dies are connected to first, second and third extruders, where the first and third dies contain the first polyolefin solutions, and the second die contains the second polyolefin solution. In this form, a laminated extrudate is formed constituting outer layers comprising the extruded first polyolefin solution and one intermediate comprising the extruded second polyolefin solution.

In yet another form, the first, second, and third dies are connected to first, second, and third extruders, where the second die contains the first polyolefin solution, and the first and third dies contain the second polyolefin solution. In this form, a laminated extrudate is formed constituting outer layers comprising the extruded second polyolefin solution and one intermediate comprising extruded first polyolefin solution.

The die gaps are generally not critical. For example, extrusion dies of the type disclosed herein can have a die gap of about 0.1 mm to about 5 mm. Die temperature and extruding speed are also non-critical parameters. For example, the dies can be heated to a die temperature ranging from about 140°C to about 250°C during extrusion. The extruding speed can range, for example, from about 0.2 m/minute to about 15 m/minute. The thickness of the layers of the layered extrudate can be independently selected. For example, the resultant sheet can have relatively thick skin or surface layers compared to the thickness of an intermediate layer of the layered extrudate.

A gel-like sheet can be obtained by cooling, for example. Cooling rate and cooling temperature are not particularly critical. For example, the multi-layer, gel-like sheet can be cooled at a cooling rate of at least about 50°C/minute until the temperature of the multi-layer, gel-like sheet (the cooling temperature) is approximately equal to the multi-layer, gel-like sheet's gelatin temperature (or lower). In one form, the extrudate is cooled to a temperature of about 25°C or lower in order to form the multi-layer gel-like sheet.

In one form, at least a portion of the first and second membrane-forming solvents are removed (or displaced) from the multi-layer gel-like sheet in order to form a solvent-removed gel-like sheet. A displacing (or "washing") solvent can be used to remove (wash away, or displace) the first and second membrane-forming solvents. The choice of washing solvent is not critical provided it is capable of dissolving or displacing at least a portion of the first and/or second membrane-forming solvent. Suitable washing solvents include, for instance, one or more of volatile solvents such as saturated hydrocarbons such as pentane, hexane, heptane, etc.; chlorinated hydrocarbons such as methylene chloride, carbon tetrachloride, etc.; ethers such as diethyl ether, dioxane, etc.; ketones such as methyl ethyl ketone, etc.; linear fluorocarbons such as trifluoroethane, C₆F₁₄, C₇F₁₆, etc.; cyclic hydrofluorocarbons such as C₅H₃F₇, etc.; hydrofluoroethers such as C₄F₉OCH₃, C₄F₉OC₂H₅, etc.; and perfluoroethers such as C₄F₉OCF₃, C₄F₉O C₂H₅, etc.

The method for removing the membrane-forming solvent is not critical, and any method capable of removing a significant amount of solvent can be used, including conventional solvent-removal methods. For example, the gel-like sheet can be washed by immersing the sheet in the washing solvent and/or showering the sheet with the washing solvent. The amount of washing solvent used is not critical, and will generally depend on the method selected for removal of the membrane-forming solvent. In one form, the membrane-forming solvent is removed from the gel-like sheet (e.g., by washing) until the amount of the remaining membrane-forming solvent in the gel-like sheet becomes less than 1 wt.%, based on the weight of the gel-like sheet.

In one form, the solvent-removed gel-like sheet obtained by removing the membrane-forming solvent is dried in order to remove volatile components (e.g., the washing solvent). Any method capable of removing the washing solvent can be used, including conventional methods such as heat-drying, wind-drying (moving air), etc. The temperature of the gel-like sheet during drying (i.e., drying temperature) is not critical. For example, the drying temperature can be equal to or lower than the crystal dispersion temperature Tcd. Tcd is the lower of the crystal dispersion temperature Tcd₁ of the polyethylene in the first resin and the crystal dispersion temperature Tcd₂ of the polyethylene in the second resin. For example, the drying temperature can be at least 5°C below the crystal dispersion temperature Tcd. The crystal dispersion temperature of the polyethylene in the first and second resins can be determined by measuring the temperature characteristics of the kinetic viscoelasticity of the polyethylene according to ASTM D-4065. In one form, the polyethylene in at least one of the first or second resins has a crystal dispersion temperature in the range of about 90°C to about100°C.

Although it is not critical, drying can be conducted until the amount of remaining washing solvent is about 5 wt.% or less on a dry basis, i.e., based on the weight of the dry microporous polyolefin membrane. In another form, drying is conducted until the amount of remaining washing solvent is about 3 wt.% or less on a dry basis.

Prior to the step for removing the membrane-forming solvents, the gel-like sheet can be stretched in order to obtain a stretched gel-like sheet.

Neither the choice of stretching method nor the degree of stretching magnification is particularly critical. In one form, the stretching can be accomplished by one or more of tenter-stretching, roller-stretching, or inflation stretching (e.g., with air). Although the choice is not critical, the stretching can be conducted monoaxially (i.e., in either the machine or transverse direction) or biaxially (both the machine and transverse direction). In the case of biaxial stretching (also called biaxial orientation), the stretching can be simultaneous biaxial stretching, sequential stretching along one planar axis and then the other (e.g., first in the transverse direction and then in the machine direction), or multi-stage stretching (for instance, a combination of the simultaneous biaxial stretching and the sequential stretching).

The stretching magnification is not critical. In a form where monoaxial stretching is used, the linear stretching magnification can be, e.g., about 2 fold or more, or about 3 to about 30 fold. In a form where biaxial stretching is used, the linear stretching magnification can be, e.g., about 3 fold or more in any lateral direction. In another form, the linear magnification resulting from stretching is at least about 9 fold, or at least about 16 fold, or at least about 25 fold, or at least about 49 fold in area magnification. When biaxial stretching is used, the stretching need not be symmetric. For example, the amount of stretching in the transverse direction can be greater than or less than, or equal to the amount of stretching in the machine direction.

The temperature of the gel-like sheet during stretching (namely the stretching temperature) is not critical. In one form, the temperature of the gel-like sheet during stretching can be about (Tm + 10°C) or lower, or optionally in a range that is higher than Tcd but lower than Tm, wherein Tm is the lesser of the melting point Tm₁ of the polyethylene in the first resin and the melting point Tm₂ of the polyethylene in the second resin.

The stretching when used generally makes it easier to produce a relatively high-mechanical strength microporous polyolefin membrane with a relatively large pore size. Such multi-layer, microporous membranes are believed to be particularly suitable for use as battery separators.

Optionally, stretching can be conducted in the presence of a temperature gradient in a thickness direction (i.e., a direction approximately perpendicular to the planar surface of the microporous polyolefin membrane) as described in JP 3347854 B2. In this case, it can be easier to produce a microporous polyolefin membrane with improved mechanical strength.

Although it is not required, the gel-like sheet can be treated with a hot solvent. When used, it is believed that the hot solvent treatment provides the fibrils (such as those formed by stretching the multi-layer gel-like sheet) with a relatively thick leaf-vein-like structure. The details of this method are described in WO 2000/20493.

In one form, the dried microporous membrane can be stretched, at least monoaxially. The stretching method selected is not critical, and conventional stretching methods can be used such as by a tenter method, etc. When the gel-like sheet has been stretched as described above the stretching of the dry microporous polyolefin membrane can be called dry-stretching, re-stretching, or dry-orientation.

The temperature of the dry microporous membrane during stretching (the "dry stretching temperature") is not critical. In one form, the dry stretching temperature is approximately equal to the melting point Tm or lower, for example, in the range of from about the crystal dispersion temperature Tcd to the about the melting point Tm. In one form, the dry stretching temperature ranges from about 90°C to about 135°C, or from about 95°C to about 130°C.

When dry-stretching is used, the stretching magnification is not critical. For example, the stretching magnification of the microporous membrane can range from about 1.1 fold to about 2.5 or about 1.1 to 2.0 fold in at least one lateral (planar) direction. Biaxial stretching can be used, and the stretching magnification need not by symmetric.

In one form, the dried microporous membrane can be heat-treated. In one form, the heat treatment comprises heat-setting and/or annealing. When heat-setting is used, it can be conducted using conventional methods such as tenter methods and/or roller methods. Although it is not critical, the temperature of the dried microporous polyolefin membrane during heat-setting (i.e., the "heat-setting temperature") can range from the Tcd to about the Tm.

Annealing differs from heat-setting in that it is a heat treatment with no load applied to the microporous polyolefin membrane. The choice of annealing method is not critical, and it can be conducted, for example, by using a heating chamber with a belt conveyer or an air-floating-type heating chamber. Alternatively, the annealing can be conducted after the heat-setting with the tenter clips slackened. The temperature of the microporous polyolefin membrane during annealing can range from about the melting point Tm or lower, from about 60°C to (Tm - 10°C), or in a range of from about 60°C to (Tm - 5°C).

In one form, the microporous polyolefin membrane can be cross-linked [e.g., by ionizing radiation rays such as a-rays, (3-rays, 7-rays, electron beams, etc.)] or can be subjected to a hydrophilic treatment [i.e., a treatment which makes the microporous polyolefin membrane more hydrophilic (e.g., a monomer-grafting treatment, a surfactant treatment, a corona-discharging treatment, etc.)].

In another form, a second method for producing the multi-layer, microporous polyolefin membrane comprises the steps of (1) combining (e.g., by melt-blending) a first polyolefin composition and a membrane-forming solvent to prepare a first polyolefin solution, (2) combining a second polyolefin composition and a second membrane-forming solvent to prepare a second polyolefin solution, (3) extruding the first polyolefin solution through at least one first die to form at least one first extrudate, (4) extruding the second polyolefin solution through at least one second die to form at least one second extrudate, (5) cooling first and second extrudates to form at least one first gel-like sheet and at least one second gel-like sheet, (6) laminating the first and second gel-like sheet to form a multi-layer, gel-like sheet, (7) removing at least a portion of the membrane-forming solvent from the resultant multi-layer, gel-like sheet to form a solvent-removed gel-like sheet, and (8) drying the solvent-removed gel-like sheet in order to form the multi-layer, microporous membrane. An optional stretching step (9), and an optional hot solvent treatment step (10), etc., can be conducted between steps (5) and (6) or between steps (6) and (7), if desired. After step (8), an optional step (11) of stretching a multi-layer, microporous membrane, an optional heat treatment step (12), an optional cross-linking step with ionizing radiations (13), and an optional hydrophilic treatment step (14), etc., can be conducted.

The main difference between the second production method and the production method described hereinabove is in the order of the steps for laminating and cooling. In the previously described production method, laminating the first and second polyolefin solutions is conducted before the cooling step. In this production method, the first and second polyolefin solutions are cooled before the laminating step.

Steps (1), (2), (7) and (8) in this production method can be the same as the steps of (1), (2), (5) and (6) in the previously described production method. For the extrusion of the first polyolefin solution through the first die, the conditions of step (3) of the first production method can be used for step (3) of the second production method. For the extrusion of the second solution through the second die, the conditions of step (4) in the first production method can be the same as the conditions of step (3) in the second production method. In one form, either the first or second polyolefin solution is extruded through a third die. In this way, a multi-layer laminate can be formed having two layers produced from the first polyolefin solution and a single layer produced from the second polyolefin solution, or vice versa.

Step (5) of this production method can be the same as step (4) in the previously described production method, except that in the second production method the first and second gel-like sheets are formed separately.

Step (6) of laminating the first and second gel-like sheets will now be explained in more detail. The choice of lamination method is not particularly critical, and conventional lamination methods such as heat-induced lamination can be used to laminate the multi-layer gel-like sheet. Other suitable lamination methods include, for example, heat-sealing, impulse-sealing, ultrasonic-bonding, etc., either alone or in combination. Heat-sealing can be conducted using, e.g., one or more pair of heated rollers where the gel-like sheets are conducted through at least one pair of the heated rollers. Although the heat-sealing temperature and pressure are not particularly critical, sufficient heating and pressure should be applied for a sufficient time to ensure that the gel-like sheets are appropriately bonded to provide a multi-layer, microporous membrane with relatively uniform properties and little tendency toward delamination. In one form, the heat-sealing temperature can be, for instance, about 90°C to about 135°C, or from about 90°C to about 115°C. In another form, the heat-sealing pressure can be from about 0.01MPa to about 50MPa.

As is the case in the first production method, the thickness of the layers formed from the first and second polyolefin solution (i.e., the layers comprising the first and second microporous layer materials) can be controlled by adjusting the thickness of the first and second gel-like sheets and by the amount of stretching (stretching magnification and dry stretching magnification), when one or more stretching steps are used. Optionally, the lamination step can be combined with a stretching step by passing the gel-like sheets through multi-stages of heated rollers.

In one form, the second production method forms a multi-layer, polyolefin gel-like sheet having at least three layers. For example, after cooling, two extruded first polyolefin solutions and one extruded second polyolefin solution to form the gel-like sheets, the multi-layer gel-like sheet can be laminated with outer layers comprising the extruded first polyolefin solution and an intermediate layer comprising the extruded second polyolefin solution. In another form, after cooling two extruded second polyolefin solutions and one extruded first polyolefin solution to form the gel-like sheets, the multi-layer gel-like sheet can be laminated with outer layers comprising the extruded second polyolefin solution and an intermediate layer comprising the extruded first polyolefin solution.

The stretching step (9) and the hot solvent treatment step (10) can be the same as the stretching step (7) and the hot solvent treatment step (8) as described for the first production method, except stretching step (9) and hot solvent treatment step (10) are conducted on the first and/or second gel-like sheets. The stretching temperatures of the first and second gel-like sheets are not critical. For example, the stretching temperatures of the first gel-like sheet can be, e.g., Tm₁+ 10°C or lower, or optionally about Tcd₁ or higher but lower than about Tm₁. The stretching temperature of the second gel-like sheet can be, e.g., Tm₂+ 10°C or lower, or optionally about Tcd₂ or higher but lower than about Tm₂.

In another form, the stretching temperature of the first gel-like sheet ranges from about the crystal dispersion temperature Tcd₁ of the polyethylene in the first resin to Tcd₁ +25°C, or from about Tcd₁ +10°C to Tcd₁ +25°C, or from about Tcd₁ +15°C to Tcd₁ +25°C. The stretching temperature of the second gel-like sheet ranges from the crystal dispersion temperature Tcd₂ of the polyethylene in the second resin to about Tcd₂ +25°C, or about Tcd₂ +10°C to Tcd₂ +25°C, or about Tcd₂ +15°C to Tcd₂ +25°C.

In yet another form, a third method for producing the multi-layer, microporous polyolefin membrane comprises the steps of (1) combining (e.g., by melt-blending) a first polyolefin composition and a membrane-forming solvent to prepare a first polyolefin solution, (2) combining a second polyolefin composition and a second membrane-forming solvent to prepare a second polyolefin solution, (3) extruding the first polyolefin solution through at least one first die to form at least one first extrudate, (4) extruding the second polyolefin solution through at least one second die to form at least one second extrudate, (5) cooling first and second extrudates to form at least one first gel-like sheet and at least one second gel-like sheet, (6) removing the first and second membrane-forming solvents from the first and second gel-like sheets to form solvent-removed first and second gel-like sheets, (7) drying the solvent-removed first and second gel-like sheets to form at least one first polyolefin membrane and at least one second polyolefin membrane, and (8) laminating the first and second microporous polyolefin membranes in order to form the multi-layer, microporous polyolefin membrane.

A stretching step (9) and a hot solvent treatment step (10), etc., can be conducted between steps (5) and (6), if desired. A stretching step (11) and a heat treatment step (12), etc., can be conducted between steps (7) and (8), if desired. After step (8), a step (13) of stretching a multi-layer, microporous membrane, a heat treatment step (14), a cross-linking step with ionizing radiations (15) and a hydrophilic treatment step (16), etc., can be conducted if desired.

Steps (1) and (2) in the third production method can be conducted under the same conditions as steps of (1) and (2) in the first production method. Steps (3), (4), and (5) in the third production method can be conducted under the same conditions as steps (3), (4), and (5) in the second method. Step (6) in the third production method can be conducted under the same conditions as step (5) in the first production method except for removing the membrane-forming solvent from the first and second gel-like sheets. Step (7) in the third production method can be conducted under the same conditions as step (6) in the first production method except that in the third production method the first and second solvent-removed gel-like sheets are dried separately. Step (8) in the third production method can be conducted under the same conditions as the step (6) in the second production method except for laminating the first and second polyolefin microporous membranes. The stretching step (9) and the hot solvent treatment step (10) in the third production method can be conducted under the same conditions as step (9) and (10) in the second production method. The stretching step (11) and the heat treatment step (12) in the third production method can be conducted under the same conditions as steps (9) and (10) in the first production method except that in the third production method the first and second polyolefin microporous membranes are stretched and/or heat treated.

In one form, in the stretching step (11) in the third production method, the stretching temperature of the first microporous polyolefin membrane can be about Tm₁ or lower, or optionally about Tcd₁ to about Tm₁, and the stretching temperature of the second microporous polyolefin membrane can be about Tm₂ or lower, or optionally about Tcd₂ to about Tm₂.

In one form, the heat treatment step (12) in the third production method can be HS and/or annealing. For example, in the heat treatment step (12) in the third production method, the heat-setting temperature of the first polyolefin microporous membranes can be about Tcd₁ to about Tm₁, or optionally about the dry stretching temperature +5°C, or optionally about the dry stretching temperature ±3°C. In one form, in the heat treatment step (12) in the third production method, the heat-setting temperature of the second microporous membrane can be about Tcd₂ to about Tm₂, or optionally the dry stretching temperature ±5°C, or optionally the dry stretching temperature ±3°C. When the HS is used, it can be conducted by, e.g., a tenter method or a roller method.

In one form, in the heat treatment step (12) in the third production method, the annealing temperature of the first microporous membrane can be about Tm₁ or lower, or optionally about 60°C to about (Tm₁ - -10°C). In one form, in the heat treatment step (12) in the third production method, the annealing temperature of the second microporous membranes can be about Tm₂ or lower, or optionally about 60°C to about (Tm₂ -10°C).

The conditions in step (13), stretching a multi-layer, microporous membrane, a heat treatment step (14), a cross-linking step with ionizing radiations (15), and a hydrophilic treatment step (16) in the third production method can be the same as those for steps (9), (10), (11), and (12) in the first production method.

The invention is further illustrated but not limited by the following embodiments:
1. An extrusion die for producing an extrudate of thermoplastic material from, e.g., a polyolefin solution, comprising:
   (a) a die outlet through which a melt stream of the thermoplastic material is extruded as a film or sheet;
   (b) a feed entrance in communication with a feed splitter for dividing the thermoplastic material into a first portion and a second portion; and
   (c) a cross flow manifold comprising:
      (i) a first cross flow manifold section for receiving the first portion of the thermoplastic material, said first cross flow manifold section comprising a first passage having a first axis positioned within a first plane of the extrusion die, a second passage in communication with said first passage and having a second axis positioned within a second plane of the extrusion die, and a third passage in communication with said second passage and having a third axis positioned within a third plane of the extrusion die, said third passage in communication with said die outlet; and
      (ii) a second cross flow manifold section for receiving the second portion of the thermoplastic material, said second cross flow manifold section comprising a first passage having a first axis positioned within said third plane of the extrusion die, a second passage in communication with said first passage and having a second axis positioned within a fourth plane of the extrusion die, and a third passage in communication with said second passage and having a third axis positioned within said first plane of the extrusion die, said third passage in communication with said die outlet.
2. The extrusion die of embodiment 1, wherein said first plane and said third plane and said second plane and said fourth plane are aligned in substantially parallel spaced relationships, respectively.
3. The extrusion die of any preceding embodiment, wherein said first cross flow manifold section further comprises a fourth passage in communication with said third passage and having a fourth axis positioned within said third plane of the extrusion die, said fourth passage in communication with said die outlet.
4. The extrusion die of embodiment 3, wherein said second cross flow manifold section further comprises a fourth passage in communication with said third passage and having a fourth axis positioned within said first plane of the extrusion die, said fourth passage in communication with said die outlet.
5. The extrusion die of any preceding embodiment, wherein said die outlet is a slotted die outlet which comprises a first die lip and a second die lip, said first die lip comprising a flexible lip bar having actuatable means located along a length thereof.
6. The extrusion die of embodiment 5, wherein said actuatable means comprises a plurality of individual lip bolts, each of said lip bolts effective for varying the width of said slotted die outlet in a region adjacent a point of adjustment.
7. The extrusion die of any preceding embodiment, wherein a portion of a melt stream of the thermoplastic material traverses said first cross flow manifold section of said cross flow manifold and said second cross flow manifold section of said cross flow manifold a distance substantially equivalent to the extrusion die's length more than once.
8. The extrusion die of any preceding embodiment, wherein said first cross flow manifold section of said cross flow manifold and said second cross flow manifold section of said cross flow manifold each have a flow path that substantially traverses the extrusion die's length at least two times.
9. The extrusion die of any preceding embodiment, wherein said first cross flow manifold section of said cross flow manifold and said second cross flow manifold section of said cross flow manifold each have a flow path of a length sufficient to substantially eliminate the shape memory characteristics of the thermoplastic material.
10. The extrusion die of any preceding embodiment, wherein said first cross flow manifold section of said cross flow manifold and said second cross flow manifold section of said cross flow manifold each have a pressure manifold in communication with said die outlet.
11. A process for making an extrudate of thermoplastic material, comprising the following steps:
   (a) combining a polyolefin composition and a solvent to prepare a polyolefin solution; and
   (b) extruding the polyolefin solution through an extrusion die to form an extrudate, the extrusion die comprising (i) a die outlet through which a melt stream of the thermoplastic materials is extruded as a multilayer film or sheet; (ii) a feed entrance in communication with a feed splitter for dividing the thermoplastic material into a first portion and a second portion; (iii) a cross flow manifold comprising: a first cross flow manifold section for receiving the first portion of the thermoplastic material, the first cross flow manifold section comprising a first passage having a first axis positioned within a first plane of the extrusion die, a second passage in communication with the first passage and having a second axis positioned within a second plane of the extrusion die, and a third passage in communication with the second passage and having a third axis positioned within a third plane of the extrusion die, the third passage in communication with the die outlet; and a second cross flow manifold section for receiving the second portion of the thermoplastic material, the second cross flow manifold section comprising a first passage having a first axis positioned within the third plane of the extrusion die, a second passage in communication with the first passage and having a second axis positioned within a fourth plane of the extrusion die, and a third passage in communication with the second passage and having a third axis positioned within the first plane of the extrusion die, the third passage in communication with the die outlet.
12. The process of embodiment 11, wherein the first plane and the third plane and the second plane and the fourth plane are aligned in substantially parallel spaced relationships, respectively.
13. The process of any of embodiments 11 or 12, wherein the first cross flow manifold section further comprises a fourth passage in communication with the third passage and having a fourth axis positioned within the third plane of the extrusion die, the fourth passage in communication with the die outlet.
14. The process of embodiment 13, wherein the second cross flow manifold section further comprises a fourth passage in communication with the third passage and having a fourth axis positioned within the first plane of the extrusion die, the fourth passage in communication with the die outlet.
15. The process of any of embodiments 11 through 14, wherein the die outlet is a slotted die outlet which comprises a first die lip and a second die lip, the first die lip comprising a flexible lip bar having actuatable means located along a length thereof.
16. The process of embodiment 15, wherein the actuatable means of the slotted die outlet of the extrusion die includes a plurality of individual lip bolts, each of the lip bolts effective for varying the width of the slotted die outlet in a region adjacent a point of adjustment.
17. The process of any of embodiments 11 through 16, wherein a portion of a melt stream of the thermoplastic material traverses the first cross flow manifold section of the cross flow manifold and the second cross flow manifold section of the cross flow manifold a distance substantially equivalent to the extrusion die's length more than once.
18. The process of any of embodiments 11 through 17, wherein the first cross flow manifold section of the cross flow manifold and the second cross flow manifold section of the cross flow manifold each have a flow path that substantially traverses the extrusion die's length at least two times.
19. The process of any of embodiments 11 through 18, wherein the first cross flow manifold section of the cross flow manifold and the second cross flow manifold section of the cross flow manifold each have a flow path of a length sufficient to substantially eliminate the shape memory characteristics of the thermoplastic material.
20. The process of any of embodiments 11 through 19, wherein the first cross flow manifold section of the cross flow manifold and the second cross flow manifold section of the cross flow manifold each have a pressure manifold in communication with the die outlet.
21. The process of any of embodiments 11 through 20, further comprising the steps of:
   (c) cooling the extrudate to form a cooled extrudate;
   (d) removing the solvent from the cooled extrudate to form a solvent-removed cooled extrudate; and
   (e) drying the solvent-removed cooled extrudate to form the microporous membrane.
22. The process of embodiment 21, further comprising the step of:
   (f) stretching the cooled extrudate and/or the microporous membrane.

All patents, test procedures, and other documents cited herein, including priority documents, are fully incorporated by reference to the extent such disclosure is not inconsistent and for all jurisdictions in which such incorporation is permitted.

While the illustrative forms disclosed herein have been described with particularity, it will be understood that various other modifications will be apparent to and can be readily made by those skilled in the art without departing from the spirit and scope of the disclosure. Accordingly, it is not intended that the scope of the claims appended hereto be limited to the examples and descriptions set forth herein but rather that the claims be construed as encompassing all the features of patentable novelty which reside herein, including all features which would be treated as equivalents thereof by those skilled in the art to which this disclosure pertains.

When numerical lower limits and numerical upper limits are listed herein, ranges from any lower limit to any upper limit are contemplated.

## Claims

1. An extrusion die for producing an extrudate of thermoplastic material, comprising:
(a) a die outlet through which a polymer solution is extruded to form the thermoplastic material;
(b) a feed entrance in communication with a feed splitter for dividing the polymer solution into a first portion and a second portion; and
(c) a cross flow manifold comprising:
(i) a first cross flow manifold section for receiving the first portion of the polymer solution, said first cross flow manifold section comprising a first passage having a first axis positioned within a first plane of the extrusion die, a second passage in communication with said first passage and having a second axis positioned within a second plane of the extrusion die, and a third passage in communication with said second passage and having a third axis positioned within a third plane of the extrusion die, said third passage in communication with said die outlet; and
(ii) a second cross flow manifold section for receiving the second portion of the polymer solution, said second cross flow manifold section comprising a first passage having a first axis positioned within said third plane of the extrusion die, a second passage in communication with said first passage and having a second axis positioned within a fourth plane of the extrusion die, and a third passage in communication with said second passage and having a third axis positioned within said first plane of the extrusion die, said third passage in communication with said die outlet.

2. The extrusion die of claim 1, wherein said first plane and said third plane and said second plane and said fourth plane are aligned in substantially parallel spaced relationships, respectively.

3. The extrusion die of claim 1, wherein said first cross flow manifold section further comprises a fourth passage in communication with said third passage and having a fourth axis positioned within said third plane of the extrusion die, said fourth passage in communication with said die outlet.

4. The extrusion die of claim 3, wherein said second cross flow manifold section further comprises a fourth passage in communication with said third passage and having a fourth axis positioned within said first plane of the extrusion die, said fourth passage in communication with said die outlet.

5. The extrusion die of claim 1, wherein said die outlet is a slotted die outlet which comprises a first die lip and a second die lip, said first die lip comprising a flexible lip bar having actuatable means.

6. The extrusion die of claim 5, wherein said actuatable means comprises a plurality of individual lip bolts, each of said lip bolts effective for varying the width of said slotted die outlet in a region adjacent a point of adjustment.

7. The extrusion die of claim 1, wherein a portion of the polymer solution traverses said first cross flow manifold section of said cross flow manifold and said second cross flow manifold section of said cross flow manifold a distance substantially equivalent to the extrusion die's length more than once.

8. The extrusion die of claim 1, wherein said first cross flow manifold section of said cross flow manifold and said second cross flow manifold section of said cross flow manifold each have a flow path that substantially traverses the extrusion die's length at least two times.

9. The extrusion die of claim 1, wherein said first cross flow manifold section of said cross flow manifold and said second cross flow manifold section of said cross flow manifold each have a flow path of a length sufficient to substantially eliminate the shape memory characteristics of the thermoplastic material.

10. The extrusion die of claim 1, wherein said first cross flow manifold section of said cross flow manifold and said second cross flow manifold section of said cross flow manifold each have a pressure manifold in communication with said die outlet.
